# EUROPÄISCHE PATENTSCHRIFT

(11) **EP 2 832 583 B1**
(45) Veröffentlichungstag und Bekanntmachung des Hinweises auf die Patenterteilung: **23.11.2016**
(21) Anmeldenummer: 14167121.4
(22) Anmeldetag: 06.05.2014
(51) Int. Cl.: B60N 2/46

(54) **Landwirtschaftliches Fahrzeug**
Agricultural vehicle
Véhicule agricole

(30) Priorität: 01.08.2013 DE 102013108245
(43) Veröffentlichungstag der Anmeldung: 04.02.2015
(73) Patentinhaber: CLAAS Tractor SAS, 78141 Velizy-Villacoublay (FR)
(72) Erfinder: Dubiez, Samuel, 94440 Villecresnes (FR)
(74) Vertreter: Budach, Steffen

(56) Entgegenhaltungen:
- EP-A2- 0 178 171
- EP-A2- 0 841 211
- EP-A2- 1 288 063
- GB-A- 2 068 719
- US-A1- 2006 042 857
- US-A1- 2009 085 392
- US-A1- 2010 187 859
- US-B1- 6 341 821
- US-B1- 6 631 652

## Beschreibung

Die Erfindung betrifft ein landwirtschaftliches Fahrzeug, insbesondere einen Traktor gemäß dem Oberbegriff des Anspruchs 1.

Landwirtschaftliche Fahrzeuge wie beispielsweise Traktoren weisen üblicherweise einen Fahrersitz auf, auf dem ein Fahrer Platz nehmen kann, um den Traktor während eines Arbeitseinsatzes zu bedienen. Zumeist ist der Fahrersitz in einer geschlossenen Kabine angeordnet, die den Fahrer bei der Arbeit vor störenden Umgebungseinflüssen (Feuchtigkeit, Wind, Temperaturen, Lärm, Staub etc.) schützt. Um dem Fahrer insbesondere während langer Arbeitseinsätze einen hohen Komfort zu bieten, sind Fahrersitze heutiger Traktoren mit zumindest einer Armlehne ausgestattet. Diese befindet sich bevorzugt auf der Seite des Sitzes, die einer Eingangstür der Kabine abgewandt ist, um den Zugang zum Sitz nicht zu behindern.

Aus dem Stand der Technik, wie beispielsweise der EP 1 288 063 A2 ist es bekannt, der Armlehne eine Bedieneinrichtung zuzuordnen, so dass der Fahrer - während sein (Unter-) Arm zur Entlastung auf der Armlehne aufliegt - bequem eine Funktion des Traktors darüber steuern kann. Beispielsweise kann über eine solche Bedieneinrichtung ein Frontlader des Traktors gesteuert werden.

Aufgrund der Vielzahl auf dem Markt verfügbarer Steuerungen für Frontlader existiert eine entsprechend große Vielfalt zugehöriger Bedieneinrichtungen, die jeweils voneinander unterschiedliche Anforderungen an den Einbau der Bedieneinrichtung stellen. Abhängig von der Bauart und insbesondere dem Übertragungsprinzip des von der Bedieneinrichtung erzeugten Steuerungssignals ist die Bedieneinrichtung beispielsweise mit hydraulischen, elektrischen oder mechanischen Steuersignalleitungen verbunden. Die Leitungen können sich in der Anzahl, im Querschnitt, in der Möglichkeit der Führung unterscheiden. Weiterhin bestehen hinsichtlich der Baugröße von Bedieneinrichtungen Unterschiede. Aufgrund der dadurch bedingten hohen Komplexität der Einbindung weisen Traktoren heute üblicherweise eine Armlehne auf, die individuell auf die jeweilige Steuereinrichtung abgestimmt sein muss. Dies erfordert eine nachteilig hohe Teilevielfalt. Ein Nachrüsten oder Umrüsten der Steuereinrichtung ist mit erheblichem Aufwand verbunden, da entweder die gesamte Armlehne ausgetauscht werden muss oder eine bezüglich des Bedienkomforts ungünstigere Lösung hinzunehmen ist, wonach die Bedieneinrichtung nämlich separat installiert und damit schlechter zugänglich

US-B-6341 821 offenbart eine landwirtschaftliches Fahrzeug mit einer Armlehne die eine Trägerstruktur aufweist, der eine Aufnahme zur lösbaren Befestigung der Bedieneinrichtung an der Trägerstruktur zugeordnet ist.

Es ist eine Aufgabe der vorliegenden Erfindung, ein landwirtschaftliches Fahrzeug, insbesondere einen Traktor anzugeben, dessen Armlehne mit unterschiedlich gestalteten Bedieneinrichtungen auf einfache Weise kombinierbar ist, wobei insbesondere ein Nachrüsten und/oder Umrüsten der Bedieneinrichtung mit geringem Aufwand möglich sein soll.

Die Aufgabe wird gelöst durch ein landwirtschaftliches Fahrzeug mit den Merkmalen des Anspruchs 1. Dieses zeichnet sich dadurch aus, dass die Armlehne eine Trägerstruktur aufweist, der eine Aufnahme zur lösbaren Befestigung der Bedieneinrichtung an der Trägerstruktur zugeordnet ist. Bei der Trägerstruktur handelt es sich ganz allgemein um eine Struktur, die zur Aufnahme von Lasten, insbesondere der Armlast des Fahrers und der Last der Bedieneinrichtung geeignet ist. Der Trägerstruktur können weitere Funktionen zukommen. Die Trägerstruktur kann auf verschiedene Weisen am Fahrersitz des Fahrzeugs angeordnet sein, insbesondere an diesen angelenkt oder daran befestigt sein, um so die Armlehne gegenüber dem Fahrersitz zu lagern. Erfindungsgemäß ist der Trägerstruktur eine Aufnahme zugeordnet, an welcher sich die Bedieneinrichtung lösbar befestigen lässt. Die Bedieneinrichtung ist demnach so gestaltet, dass diese von einer der Trägerstruktur zugeordneten Aufnahme so aufgenommen werden kann, dass eine lösbare Befestigung zwischen diesen besteht. Dies bringt den Vorteil mit sich, dass die Bedieneinrichtung mit verhältnismäßig geringem Aufwand an die Trägerstruktur angebaut und/oder von dieser gelöst werden kann. Damit lässt sich die Bedieneinrichtung beispielsweise auch nachträglich an der Armlehne befestigen, wenn beispielsweise das Fahrzeug mit einer Hubeinrichtung wie einem Frontlader (oder einer sonstigen zu steuernden Funktion) nachgerüstet wird. Daneben ergibt sich der Vorteil einfacher Umrüstbarkeit, da durch die an der Trägerstruktur vorgesehene Aufnahme eine Schnittstelle geschaffen ist, an der sich verschieden gestaltete Bedieneinrichtungen befestigen lassen. Beispielsweise könnten an derselben Aufnahme Bedieneinrichtungen mit ganz unterschiedlichem Funktionsprinzip (mechanische, hydraulische, elektrische Steuersignalübertragung) oder ganz unterschiedlichem Funktionsbezug (Frontlader, Getriebesteuerung etc.) befestigt werden, solange eine Kompatibilität der Bedieneinrichtung mit der durch die Aufnahme geschaffenen Schnittstelle gewährleistet ist. Durch die so geschaffene hohe Kompatibilität der Armlehne werden Vorteile hinsichtlich Um- und Nachrüstbarkeit sowie hinsichtlich einer reduzierten Teilevielfalt und damit einer reduzierten Komplexität der Montage des Fahrzeugs erreicht.

Vorteilhaft wird die Aufnahme durch einen an der Trägerstruktur vorgesehenen Kontaktbereich gebildet. Dieser ist zweckmäßigerweise komplementär zu einem an der Bedieneinrichtung vorgesehenen Kontaktbereich ausgebildet ist und diesem ist zumindest ein Haltemittel zum Halten der Bedieneinrichtung zugeordnet. Demnach weisen Trägerstruktur und Bedieneinrichtung komplementär zueinander ausgebildete Kontaktbereiche auf, so dass beispielsweise durch Kraftschluss und/oder durch Formschluss eine lösbare Verbindung zwischen diesen herstellbar ist. Die Kontaktbereiche können dazu geeignete Führungsmittel (z.B. Führungsschienen, Anschläge, Klemmeinrichtungen oder dergleichen) aufweisen. Als Haltemittel können Verschraubungen, Stifte, Schnappverbinder oder dergleichen zum Einsatz kommen.

Da es sich bei der Bedieneinrichtung um ein Bauteil handelt, das zur Bedienung zumindest einer Funktion des Fahrzeugs (zum Beispiel: Steuerung eines Frontladers) dient, weist vorteilhaft ein Kontaktbereich einen Durchgang auf, durch welchen eine zwischen Bedieneinrichtung und einem am Fahrzeug befindlichen Anschluss verlaufende Steuersignalleitung oder ein Bündel derartiger Steuersignalleitungen durchführbar ist. Ein derartiger Durchgang ermöglicht somit eine nach außen hin versteckte und damit gut geschützte Führung von Steuersignalleitungen von der Bedieneinrichtung, insbesondere durch die Armlehne hindurch, an deren Anschluss. Gleichwohl können Steuersignalleitungen auch auf andere Weise geführt werden, wenn beispielsweise die Bauart der Bedieneinrichtung eine derartige Führung der Steuersignalleitungen durch den Durchgang nicht erlaubt.

Gemäß einer bevorzugten Weiterbildung der Erfindung ist die Bedieneinrichtung eine bauliche Einheit, die eine Halteeinrichtung, einen beweglich daran gelagerten Bedienhebel sowie einen Wandler umfasst, der sich zur Wandlung von Bewegungen des Bedienhebels in mechanische, elektrische und/oder hydraulische Steuersignale eignet. Der Bedienhebel kann dabei vorteilhaft im Sinne eines sogenannten "Joysticks" ausgeführt sein, der an einem endseitigen Griffbereich von einer Hand des Fahrers umgriffen werden kann. Durch vorwärts, rückwärts, links, rechts gerichtete Handbewegungen kann der Fahrer den Bedienhebel dabei in vier Richtungen (zwei Freiheitsgrade) auslenken, um so beispielsweise zwei Steuerkanäle eines Frontladers (Hub und Kippen) anzusteuern. Alternativ könnte damit eine Ansteuerung eines Getriebes erfolgen, indem mit dem einen Steuerkanal verschiedene Gruppen eines Getriebes schaltbar sind und mit dem anderen Steuerkanal einzelne Gangstufen innerhalb der gewählten Gruppe schaltbar sind. Die Bewegungen des Bedienhebels werden mit einem Wandler in Steuersignale gewandelt, wobei es sich hierbei um mechanische, elektrische und/oder hydraulische Steuersignale handeln kann. Entsprechend ist der Wandler der Bedieneinrichtung über mechanische (Bowdenzug), elektrische (Stromkabel) bzw. hydraulische (Schlauch) Steuersignalleitungen mit einem Steueranschluss am Fahrzeug verbunden.

Um dem Fahrer einen hohen Komfort zu bieten, ist der Trägerstruktur obenseitig eine Ellenbogenauflage zugeordnet, die insbesondere unter ergonomischen wie haptischen Aspekten für den Fahrer angenehm gestaltet ist. Zu diesem Zweck ist weiterhin die Bedieneinrichtung im an der Trägerstruktur befestigten Zustand relativ zu der Ellenbogenauflage vorteilhaft so positioniert, dass ein Fahrzeugbediener mit auf der Ellenbogenauflage liegendem Unterarm die Bedieneinrichtung mit der Hand erreichen kann. Dies setzt einen geeigneten Abstand der Bedieneinrichtung von der Ellenbogenauflage sowie eine geeignete Höhe der Bedieneinrichtung gegenüber der Ellenbogenauflage voraus, wobei sich insbesondere ein Griffbereich eines an der Bedieneinrichtung vorgesehenen Bedienhebels etwa in der Höhe der Hand eines auf der Ellenbogenauflage aufliegenden Unterarms befindet. Damit ist eine bequeme Erreichbarkeit gewährleistet.

Eine bevorzugte Weiterbildung des Fahrzeugs sieht vor, dass die Bedieneinrichtung an einem bezogen auf eine Fahrzeuglängsrichtung vorderen Ende der Trägerstruktur an dieser befestigbar ist. Somit kann die der Trägerstruktur zugeordnete Aufnahme bevorzugt durch eine vordere Kontaktfläche der Trägerstruktur gebildet werden. Im befestigten Zustand bildet die Bedieneinrichtung damit eine Verlängerung der Armlehne. Durch die frontseitige Befestigung besteht daneben der Vorteil, dass von der Bedieneinrichtung abgehende Steuersignalleitungen, die möglicherweise nicht durch einen Durchgang in der Kontaktfläche und durch die Armlehne führbar sind, auf einfache Weise nach unten von der Bedieneinrichtung weggeführt werden können, ohne dass sonstige Elemente der Armlehne dies behindern. Eine hohe Kompatibilität ist damit gewährleistet.

Zweckmäßigerweise ist die Armlehne bezogen auf die Fahrzeuglängsrichtung seitlich neben dem Fahrersitz angeordnet, insbesondere daran befestigt oder angelenkt. Dabei kann bevorzugt die Armlehne in deren Position relativ zum Fahrersitz bewegbar gelagert sein, um eine individuelle Anpassbarkeit an unterschiedliche Fahrer des Fahrzeugs zu bieten.

Eine konstruktiv bevorzugte Weiterbildung des Fahrzeugs sieht vor, dass die Trägerstruktur mittels einer Viergelenkmechanik mit dem Fahrerersitz verbunden ist, welche eine Höhenverstellung der Armlehne ermöglicht. Eine solche Viergelenkmechanik ist vorteilhaft im Sinne einer Parallelogrammkinematik gestaltet, wonach sich die Trägerstruktur gegenüber dem Fahrersitz über zwei gleich lange, jeweils beidends gelenkig gelagerte Glieder abstützt, die parallel zueinander angeordnet sind. Die Trägerstruktur kann auf diese Weise bei konstanter Winkellage (beispielsweise bei waagerechter Ellenbogenauflage) in der Höhe gegenüber dem Fahrersitz verstellt werden. Bevorzugt sind Mittel zum Verrasten in verschiedenen Höhenpositionen vorgesehen.

Ergänzend oder alternativ ist die Trägerstruktur bezogen auf die Fahrzeuglängsrichtung längsverschiebbar gegenüber der Viergelenkmechanik gelagert, um neben einer Höhenanpassung auch eine Längsanpassung zu ermöglichen. Auf diese Weise lässt sich insbesondere auch der Abstand der Bedieneinrichtung vom Fahrer individuell anpassen.

Die Armlehne kann vorteilhaft weitere Funktionselemente aufweisen, insbesondere kann dieser ein unter der Ellenbogenauflage befindliches Staufach zugeordnet sein. Damit könnten in der Armlehne kleine Gegenstände (Mobiltelefon, Getränkeflaschen, Brille etc.) sicher und für den Fahrer während des Betriebs leicht zugänglich gelagert werden.

Es sind bereits zuvor Anwendungsmöglichkeiten für die der Armlehne zugeordnete Bedieneinrichtung genannt worden. Gemäß einer bevorzugten Anwendung ist das Fahrzeug demnach mit einer Hubeinrichtung, insbesondere mit einem Frontlader ausgestattet, wobei die Bedieneinrichtung mit einer Aktorik der Hubeinrichtung derart in Signalverbindung steht, dass sich mittels der Bedieneinrichtung die Hubeinrichtung betätigen lässt. Ergänzend oder alternativ ist die Bedieneinrichtung mit einer Getriebesteuerung derart in Signalverbindung bringbar, dass sich mittels der Bedieneinrichtung Funktionen eines Getriebes des Fahrzeugs steuern lassen.

Zur Erzielung einer sicheren Befestigung der Bedieneinrichtung an der Trägerstruktur der Armlehne ist es denkbar, dass die Trägerstruktur und die daran befestigte Bedieneinrichtung zumindest bereichsweise von einem gemeinsamen Verkleidungselement abdeckbar sind. Einem solchen Verkleidungselement kann auch eine optische Funktion zukommen, indem durch die gemeinsame Abdeckung von Bedieneinrichtung und Trägerstruktur für einen Betrachter der Eindruck einer baulichen und auch gestalterischen Einheit geschaffen wird.

Die Erfindung wird nachfolgend anhand eines Ausführungsbeispiels näher erläutert. Dazu sei auf die beigefügten Figuren verwiesen. Darin zeigt:
- Fig. 1: einen Traktor in schematischer Seitenansicht,
- Fig. 2: einen Fahrersitz mit angebauter Armlehne in schematischer Draufsicht,
- Fig. 3: eine Armlehne in perspektivischer Ansicht von schräg rechts,
- Fig. 4: die Armlehne aus Fig. 3 in Ansicht von schräg links,
- Fig. 5: eine Trägerstruktur und eine daran befestigbare Bedieneinrichtung in perspektivischer Ansicht.

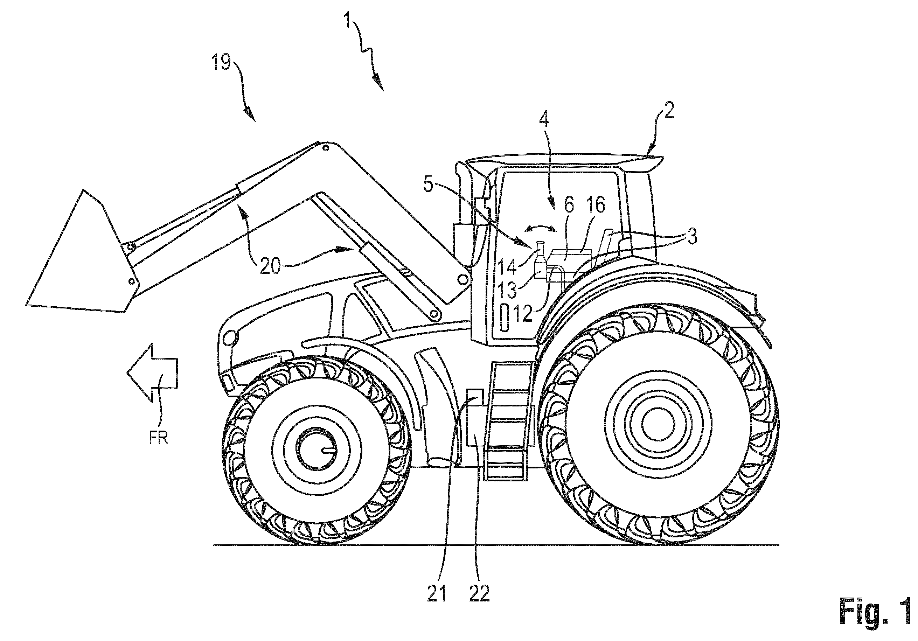

In Fig. 1 ist ein landwirtschaftliches Fahrzeug in Form eines Traktors 1 in schematischer Seitenansicht gezeigt. Der Traktor 1 verfügt über eine Hubeinrichtung in Form eines Frontladers 19, der beispielsweise zum Heben und Transportieren von Schüttgut mit einer Ladeschaufel ausgestattet ist, die an einem - bezogen auf eine Fahrtrichtung FR des Traktors 1 - frontseitigen Ende des Frontladers 19 angelenkt ist. Der Frontlader 19 lässt sich über eine hydraulisch arbeitende Aktorik 20 betätigen, umfassend jeweils ein Kolben-Zylinder-Paar (in der Zeichnungsansicht der Fig. 1 ist jeweils nur eines davon zu sehen) zur Verstellung der Höhe des Frontladers bzw. des Kippwinkels der Ladeschaufel.

Daneben verfügt der Traktor 1 über ein Getriebe 22, das als Lastschaltgetriebe ausgeführt ist. Das Getriebe lässt sich über eine zugeordnete Getriebesteuerung 21 in Gruppen schalten und lässt sich innerhalb jeder Gruppe in verschiedenen Schaltstufen schalten.

Der Traktor 1 weist weiterhin eine Fahrerkabine 2 auf, in der ein Fahrersitz 3 angeordnet ist. An dem Fahrersitz 3 ist eine Armlehne 4 angeordnet, die im Wesentlichen eine Trägerstruktur 6 sowie eine Bedieneinrichtung 5 umfasst. Die Trägerstruktur 6 ist an dem Fahrersitz 3 auf noch näher zu beschreibende Weise angelenkt. Über der Trägerstruktur 6 ist eine Ellenbogenauflage 16 angeordnet. Auf diese Ellenbogenauflage 16 kann ein auf dem Fahrersitz Platz nehmender Fahrer seinen Unterarm zur Abstützung auflegen. Bezogen auf die Fahrtrichtung FR vor der Trägerstruktur 6 ist eine Bedieneinrichtung 5 angeordnet, die auf noch zu näher zu beschreibende Weise lösbar an der Trägerstruktur 6 befestigt ist. Die Bedieneinrichtung 5 umfasst im Wesentlichen eine Halteeinrichtung 13, einen beweglich daran gelagerten Bedienhebel 14 sowie einen Wandler 15 (in Fig. 1 nicht bezeichnet). Eine von der Bedieneinrichtung 5 abgehende Steuersignalleitung 12 verläuft in waagerechter Richtung zunächst gerade in die Trägerstruktur 6 hinein, um innerhalb der Trägerstruktur 6 einen nach unten gekrümmten Verlauf einzunehmen. Anschließend verlässt die Steuersignalleitung 12 die Trägerstruktur 6 in vertikaler Richtung nach unten. Mittels der Bedieneinrichtung 5 kann ein in der Fahrerkabine 2 auf dem Fahrersitz 3 Platz nehmender Fahrer Funktionen des Traktors 1 bedienen. Insbesondere kann über die Bedieneinrichtung 5 der Frontlader 19 in dessen Höhe und der Kippwinkel des Frontladers 19 verstellt werden. Alternativ oder ergänzend kann vorgesehen sein, dass sich über die Bedieneinrichtung 5 das Getriebe 22 steuern lässt. Dies könnte beispielsweise durch ein Umschalten in einen anderen Betriebsmodus erfolgen, wodurch die Bedieneinrichtung 5 nicht mehr der Steuerung des Frontladers 19, sondern des Getriebes 22 zugeordnet ist.

Im Übrigen weist der in Fig. 1 gezeigte Traktor 1 zahlreiche für sich bekannte und daher hier nicht im Einzelnen zu erläuternde Merkmale auf.

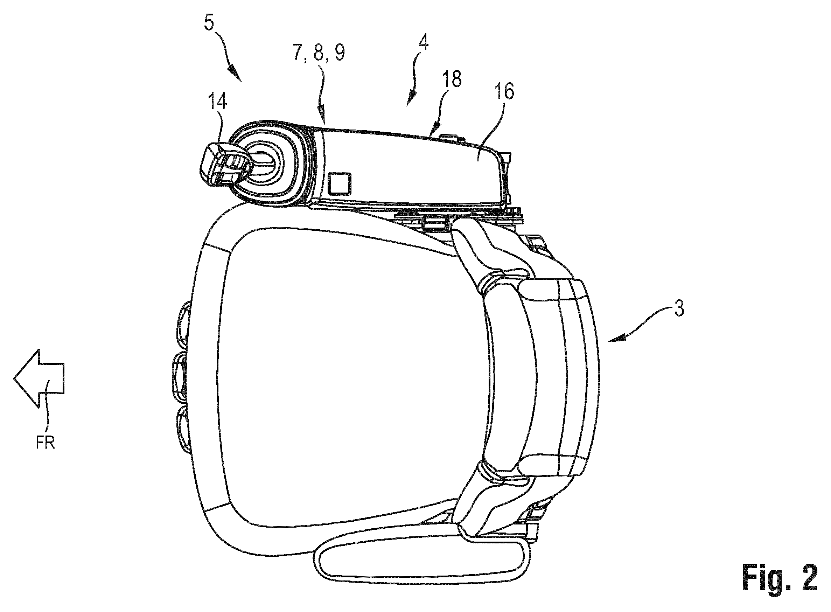

In Fig. 2 ist nun ein Fahrersitz 3 mit angebauter Armlehne 4 in schematischer Draufsicht gezeigt. Es könnte sich bei dem Fahrersitz 3 um einen Fahrersitz handeln, der in einen Traktor 1 gemäß Fig. 1 eingebaut ist. Der Darstellung gemäß Fig. 2 ist zu entnehmen, dass an dem Fahrersitz 3 bezogen auf die angezeigte Fahrtrichtung FR rechtsseitig eine Armlehne 4 angeordnet ist, der eine Bedieneinrichtung 5 zugeordnet ist. Eine Trägerstruktur 6 der Armlehne 4 wird in der Draufsicht von der Ellenbogenauflage 16 vollständig verdeckt und ist daher nicht zu sehen. Die Bedieneinrichtung 5 befindet sich im vorderen Bereich der Armlehne 4 und ist im Sinne einer Verlängerung so relativ zu der Ellenbogenauflage 16 positioniert, dass ein auf dem Fahrersitz 3 befindlicher Fahrer die Bedieneinrichtung 5, insbesondere einen Griffbereich von deren Bedienhebel 14, mit auf der Ellenbogenauflage 16 liegendem Unterarm bequem erreichen kann.

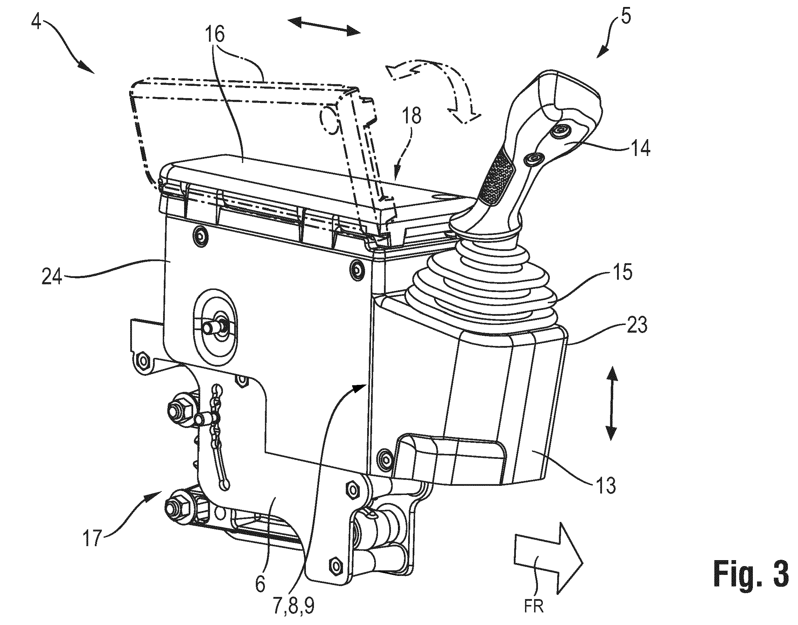

Fig. 3 zeigt nun die Armlehne 4 in perspektivischer Ansicht von schräg rechts. Die Trägerstruktur 6 ist demnach mit einer Viergelenkmechanik 17 verbunden, die eine Parallelogrammkinematik aufweist. Diese dient der beweglichen Verbindung der Trägerstruktur 6 mit dem (in Fig. 3 nicht gezeigten) Fahrersitz 3. Durch diese Art der Lagerung ist die Trägerstruktur 6 und damit die Armlehne 4 gegenüber dem Fahrersitz 3 höhenverstellbar (siehe rechter Doppelpfeil), wobei die Parallelogrammkinematik bei jeder Höhenstellung eine gleichbleibende, waagerechte Ausrichtung der Trägerstruktur 6 und damit der Ellenbogenauflage 16 gewährleistet. Über eine mittels eines Bedienknopfes betätigbare Verrastmechanik lässt sich die Trägerstruktur 6 in einer gewünschten Höhenstellung arretieren. Die Trägerstruktur 6 ist weiterhin bezogen auf die Fahrzeuglängsrichtung FR längsverschiebbar gegenüber der Viergelenkmechanik 17 gelagert (siehe oberer Doppelpfeil). Über einen weiteren Bedienknopf lässt sich die Trägerstruktur 6 in einer gewünschten Längsstellung arretieren.

Die Ellenbogenauflage 16 ist beweglich gegenüber der Trägerstruktur 6 gelagert. Insbesondere lässt sich die Ellenbogenauflage 16 von einem ebenen Zustand (durchgehende Linien) in einen hochgeklappten Zustand (gestrichelte Linien) um eine Schwenkachse klappen. Im hochgeklappten Zustand gibt die Ellenbogenauflage 16 ein innerhalb der Trägerstruktur 6 befindliches Staufach 18 nach oben frei (geöffneter Zustand), so dass dieses zum Einlegen oder Entnehmen von kleinen Gegenständen wie beispielsweise Wertgegenständen, Mobiltelefon, Brille etc. zugänglich ist.

An einer bezogen auf die Fahrtrichtung FR rechten Seite der Armlehne 4 sind die Trägerstruktur 6 und die daran befestigte Bedieneinrichtung 5 von einem gemeinsamen Verkleidungselement 24 verdeckt. Es handelt sich hierbei um eine Kunststoffteil, dass an mehreren Stellen mit der Trägerstruktur 6 und der Bedieneinrichtung 5 verschraubt ist. Auf der gegenüberliegenden linken Seite der Armlehne 4 sind die Trägerstruktur 6 und die daran befestigte Bedieneinrichtung 5 von einem weiteren gemeinsamen Verkleidungselement 23 verdeckt. Auch hierbei handelt es sich um eine Kunststoffteil, dass an mehreren Stellen mit der Trägerstruktur 6 und der Bedieneinrichtung 5 verschraubt ist.

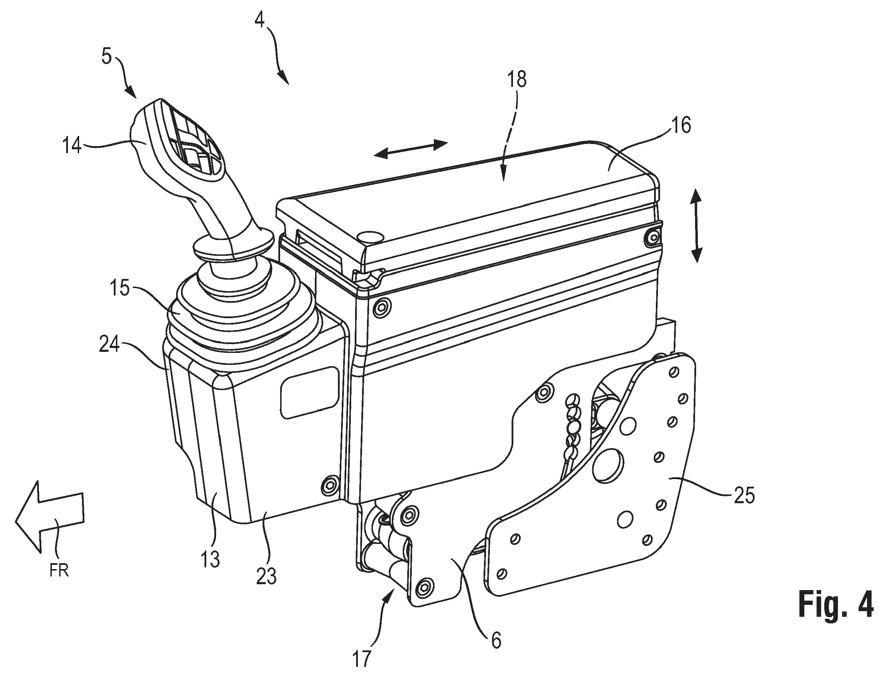

In Fig. 4 ist nun die Armlehne gemäß Fig. 3 in Ansicht von schräg links (bezogen auf die Fahrtrichtung FR) gezeigt. Ergänzend zu den bereits im Zusammenhang mit Fig. 3 beschriebenen und daher nicht zu wiederholenden Merkmalen geht aus dieser Darstellung der Aufbau der Lagerung der Trägerstruktur 6 noch weiter hervor. Demnach ist die Viergelenkmechanik 17 einerseits an die Trägerstruktur 6, andererseits an eine Halteplatte 25 angelenkt. Die Halteplatte 25 ist über Befestigungslöcher an den Fahrersitz 3 (siehe Fig. 2) anschraubbar und somit im Montagezustand an diesem befestigt.

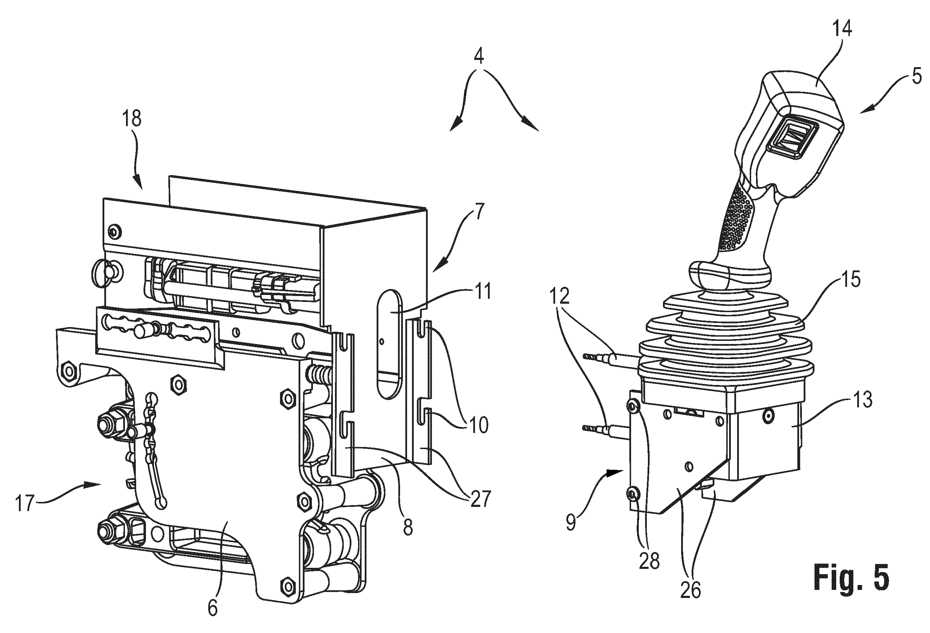

Schließlich zeigt Fig. 5 eine Trägerstruktur 6 und eine daran befestigbare Bedieneinrichtung 5 in perspektivischer Ansicht. Zur besseren Verständlichkeit des Aufbaus und Zusammenwirkens sind dabei die Verkleidungselemente 23, 24 weggelassen worden. Aus der Darstellung geht hervor, dass der Trägerstruktur 6 eine Aufnahme 7 zugeordnet ist. Diese Aufnahme 7 dient zur lösbaren Befestigung der Bedieneinrichtung 5 an der Trägerstruktur 6. Die Aufnahme 7 wird durch einen an der Trägerstruktur 6 ausgebildeten Kontaktbereich 8 gebildet, der eine frontseitige ebene Stirnfläche sowie zwei seitlich davon ausgebildete Führungsabschnitte 27 umfasst. An jedem der Führungsabschnitte 27 sind zwei nach oben geöffnete Haltegabeln 10 ausgebildet. Der Kontaktbereich 8 der Aufnahme 7 ist komplementär zu einem an der Bedieneinrichtung 5 vorgesehenen Kontaktbereich 9 ausgebildet. Dementsprechend lässt sich die Bedieneinrichtung 5 mit deren Kontaktbereich 9 in Verbindung bringen mit dem Kontaktbereich 8 der Trägerstruktur 6. Dazu wird die Bedieneinrichtung 5 aus dem in Fig. 5 gezeigten Zustand zunächst in Richtung der Trägerstruktur 6 bewegt bis zunächst äußere Begrenzungen 26 des Kontaktbereichs 9 der Bedieneinrichtung 5 außenseitig mit den Führungsabschnitten 27 der Trägerstruktur 6 in Eingriff gelangen, insbesondere diese zwischen sich einschließen. An den äußeren Begrenzungen 26 angeordnete nach innen weisende Führungselemente 28 befinden sich dann oberhalb der nach oben geöffneten Haltegabeln 10. Durch eine anschließende abwärts gerichtete Bewegung der Bedieneinrichtung 5 rutschen die Führungselemente 28 in die Haltegabeln 10, so dass die Bedieneinrichtung 5 formschlüssig mit der Trägerstruktur 6 verbunden ist. Nur durch Anheben der Bedieneinrichtung 5 lässt sich diese wieder von der Trägerstruktur 6 lösen.

Der Kontaktbereich 7 der Trägerstruktur 6 weist weiterhin einen Durchgang 11 in Form eines Langlochs auf. Durch diesen Durchgang 11 ist eine zwischen Bedieneinrichtung 5 und einem am Traktor 1 befindlichen Anschluss verlaufende Steuersignalleitung 12 oder ein Bündel derartiger Leitungen durchführbar. In Fig. 5 sind aus Darstellungsgründen zwei Steuersignalleitungen 12 nur verkürzt gezeigt. Es handelt kann sich hierbei jeweils um Bowdenzüge zur mechanischen Übertragung von Stellbewegungen des Bedienhebels 14 handeln. Da diese mit definierter Krümmung durch die Trägerstruktur 6 führbar sind, werden unerwünschte Knickungen der Steuersignalleitungen 12 vermieden. Alternativ oder ergänzend kann es sich um Leitungen zur hydraulischen und/oder elektrischen Signalübertragung handeln.

Aus Fig. 5 geht weiterhin hervor, dass die Bedieneinrichtung 5 eine bauliche Einheit ist, die eine Halteeinrichtung 13, einen beweglich daran gelagerten Bedienhebel 14 sowie einen Wandler 15 umfasst. Dieser Wandler 15, bei dem es sich um einen Wandler in für sich bekannter Bauart handeln kann, dient dazu, Bewegungen des Bedienhebels 14 in mechanische, elektrische und/oder hydraulische Steuersignale umzuwandeln, die dann über eine oder mehrere Steuersignalleitungen 12 weitergeleitet werden.

Im an die Trägerstruktur 6 montierten Zustand kann die Bedieneinrichtung 5 dazu dienen, die Aktorik 20 eines wie in Fig. 1 gezeigten Frontladers 19 anzusteuern, so dass sich der Frontlader 19 damit betätigen lässt.

In vorteilhafter Weise lassen sich an die Armlehne 4 auf einfache Weise unterschiedlich aufgebaute Bedieneinrichtungen 5 anbauen. Auf vorteilhafte Weise kann dabei eine Bedieneinrichtung 5 zum Einsatz kommen, bei der - wie in Fig. 5 dargestellt - die Steuersignalleitungen 12 durch die Trägerstruktur 6 hindurch verlaufen. Daneben ist es ebenfalls möglich, eine (hier nicht dargestellte) Bedieneinrichtung zu verwenden, bei der die Steuersignalleitungen 12 nicht zur Seite, sondern nach unten aus der Bedieneinrichtung austreten. Durch die Aufnahme 7 wird in jedem Fall eine Schnittstelle bereitgestellt, die sowohl ein Nachrüsten als auch ein Umrüsten oder eine Wartung bzw. Reparatur der Bedieneinrichtung 5 mit geringem Aufwand ermöglicht. Dabei ist gewährleistet, dass die Bedieneinrichtung 5 stets an einer für den Fahrer geeigneten Stelle, nämlich am vorderen Ende der Armlehne 4 und somit im bequemen Zugriffsbereich angeordnet ist.

### Bezugszeichenliste

- 1: Traktor
- 2: Fahrerkabine
- 3: Fahrersitz
- 4: Armlehne
- 5: Bedieneinrichtung
- 6: Trägerstruktur
- 7: Aufnahme
- 8: Kontaktbereich
- 9: Kontaktbereich
- 10: Haltegabel
- 11: Durchgang
- 12: Steuersignalleitung
- 13: Halteeinrichtung
- 14: Bedienhebel
- 15: Wandler
- 16: Ellenbogenauflage
- 17: Viergelenkmechanik
- 18: Staufach
- 19: Frontlader
- 20: Aktorik
- 21: Getriebesteuerung
- 22: Getriebe
- 23: Verkleidungselement
- 24: Verkleidungselement
- 25: Halteplatte
- 26: Begrenzung
- 27: Führungsabschnitt
- 28: Führungselement
- FR: Fahrzeuglängsrichtung

## Patentansprüche

1. Landwirtschaftliches Fahrzeug, insbesondere Traktor (1), mit einer an einem Fahrersitz (3) des Fahrzeugs (1) angeordneten Armlehne (4), der zumindest eine Bedieneinrichtung (5) zur Bedienung einer Funktion des Fahrzeugs (1) zugeordnet ist, wobei die Armlehne (4) eine Trägerstruktur (6) aufweist, der eine Aufnahme (7) zur lösbaren Befestigung der Bedieneinrichtung (5) an der Trägerstruktur (6) zugeordnet ist, **dadurch gekennzeichnet, dass**
die Aufnahme (7) durch einen an der Trägerstruktur (6) vorgesehenen Kontaktbereich (8) gebildet wird, der komplementär zu einem an der Bedieneinrichtung (5) vorgesehenen Kontaktbereich (9) ausgebildet ist und dem zumindest ein Haltemittel (10) zum Halten der Bedieneinrichtung (5) zugeordnet ist, wobei durch Kraftschluss und/oder Formschluss eine lösbare Verbindung zwischen den Kontaktbereichen (8, 9) herstellbar ist.

2. Fahrzeug nach Anspruch 1, **dadurch gekennzeichnet, dass** ein Kontaktbereich (8, 9) einen Durchgang (11) aufweist, durch welchen eine zwischen Bedieneinrichtung (5) und einem am Fahrzeug (1) befindlichen Anschluss verlaufende Steuersignalleitung (12) oder ein Bündel derartiger Steuersignalleitungen (12) durchführbar ist.

3. Fahrzeug nach einem der vorigen Ansprüche, **dadurch gekennzeichnet, dass** die Bedieneinrichtung (5) eine bauliche Einheit ist, die eine Halteeinrichtung (13), einen beweglich daran gelagerten Bedienhebel (14) sowie einen Wandler (15) umfasst, der sich zur Wandlung von Bewegungen des Bedienhebels (14) in mechanische, elektrische und/oder hydraulische Steuersignale eignet.

4. Fahrzeug nach einem der vorigen Ansprüche, **dadurch gekennzeichnet, dass** der Trägerstruktur (6) obenseitig eine Ellenbogenauflage (16) zugeordnet ist.

5. Fahrzeug nach Anspruch 4, **dadurch gekennzeichnet, dass** die Bedieneinrichtung (5) im an der Trägerstruktur (6) befestigten Zustand relativ zu der Ellenbogenauflage (16) so positioniert ist, dass ein Fahrzeugbediener mit auf der Ellenbogenauflage (16) liegendem Unterarm die Bedieneinrichtung (5) mit der Hand erreichen kann.

6. Fahrzeug nach einem der vorigen Ansprüche, **dadurch gekennzeichnet, dass** die Bedieneinrichtung (5) an einem bezogen auf eine Fahrzeuglängsrichtung (FR) vorderen Ende der Trägerstruktur (6) an dieser befestigbar ist.

7. Fahrzeug nach einem der vorigen Ansprüche, **dadurch gekennzeichnet, dass** die Armlehne (4) bezogen auf die Fahrzeuglängsrichtung (FR) seitlich neben dem Fahrersitz (3) angeordnet ist.

8. Fahrzeug nach einem der vorigen Ansprüche, **dadurch gekennzeichnet, dass** die Armlehne (4) in deren Position relativ zum Fahrersitz (3) bewegbar gelagert ist.

9. Fahrzeug nach einem der vorigen Ansprüche, **dadurch gekennzeichnet, dass** die Trägerstruktur (6) mittels einer Viergelenkmechanik (17), insbesondere im Sinne einer Parallelogrammkinematik, mit dem Fahrerersitz (3) verbunden ist, welche eine Höhenverstellung der Armlehne (4) ermöglicht.

10. Fahrzeug nach Anspruch 10, **dadurch gekennzeichnet, dass** die Trägerstruktur (6) bezogen auf die Fahrzeuglängsrichtung (FR) längsverschiebbar gegenüber der Viergelenkmechanik (17) gelagert ist.

11. Fahrzeug nach einem der vorigen Ansprüche, **dadurch gekennzeichnet, dass** die Armlehne (4) weitere Funktionselemente, insbesondere ein unter der Ellenbogenauflage befindliches Staufach (18), aufweist.

12. Fahrzeug nach einem der vorigen Ansprüche, **dadurch gekennzeichnet, dass** das Fahrzeug (1) mit einer Hubeinrichtung, insbesondere mit einem Frontlader (19) ausgestattet ist, wobei die Bedieneinrichtung (5) mit einer Aktorik (20) der Hubeinrichtung (19) derart in Signalverbindung steht, dass sich mittels der Bedieneinrichtung (5) die Hubeinrichtung (19) betätigen lässt.

13. Fahrzeug nach einem der vorigen Ansprüche, **dadurch gekennzeichnet, dass** die Bedieneinrichtung (5) mit einer Getriebesteuerung (21) derart in Signalverbindung bringbar ist, dass sich mittels der Bedieneinrichtung (5) Funktionen eines Getriebes (22) des Fahrzeugs (1) steuern lassen.

14. Fahrzeug nach einem der vorigen Ansprüche, **dadurch gekennzeichnet, dass** die Trägerstruktur (6) und die daran befestigte Bedieneinrichtung (5) zumindest bereichsweise von einem gemeinsamen Verkleidungselement (23, 24) abdeckbar sind.

## Claims

1. An agricultural vehicle, in particular a tractor (1), having an arm rest (4) which is arranged on a driver seat (3) of the vehicle (4) and with which there is associated at least one operating device (5) for operating a function of the vehicle (1), wherein the arm rest (4) has a carrier structure (6) with which there is associated a receiving means (7) for releasable fixing of the operating device (5) to the carrier structure (6), **characterised in that**
the receiving means (7) is formed by a contact region (8) which is provided on the carrier structure (6) and which is of a complementary configuration to a contact region (9) provided on the operating device (5) and with which there is associated at least one holding means (10) for holding the operating device (5), wherein a releasable connection can be made between the contact regions (8, 9) by a force-locking and/or a positively locking connection.

2. A vehicle according to claim 1 **characterised in that** a contact region (8, 9) has a passage (11) through which a control signal line (12) extending between the operating device (5) and a connection on the vehicle (1) or a bundle of such control signal lines (12) can be passed.

3. A vehicle according to one of the preceding claims **characterised in that** the operating device (5) is a structural unit which includes a holding device (13), an operating lever (14) mounted moveably thereto and a converter (15) which is suitable for the conversion of movements of the operating lever (14) into mechanical, electrical and/or hydraulic control signals.

4. A vehicle according to one of the preceding claims **characterised in that** an elbow support (16) is associated with the carrier structure (6) at the top side.

5. A vehicle according to claim 4 **characterised in that** in the condition of being fixed to the carrier structure (6) the operating device (5) is so positioned relative to the elbow support (16) that a vehicle operator can reach the operating device (5) with the hand, with the forearm resting on the elbow support (16).

6. A vehicle according to one of the preceding claims **characterised in that** the operating device (5) can be fixed to the carrier structure (6) at an end of the carrier structure, that is the front end with respect to a vehicle longitudinal direction (FR).

7. A vehicle according to one of the preceding claims **characterised in that** the arm rest (4) is arranged laterally beside the driver seat (3) with respect to the vehicle longitudinal direction (FR).

8. A vehicle according to one of the preceding claims **characterised in that** the arm rest (4) is mounted moveably in its position relative to the driver seat (3).

9. A vehicle according to one of the preceding claims **characterised in that** the carrier structure (6) is connected to the driver seat (3) by means of a four-link mechanism (17), in particular in the manner of a parallelogram kinematic system, which permits height adjustment of the arm rest (4).

10. A vehicle according to claim 9 **characterised in that** the carrier structure (6) is mounted longitudinally displaceably relative to the four-link mechanism (17) with respect to the vehicle longitudinal direction (FR).

11. A vehicle according to one of the preceding claims **characterised in that** the arm rest (4) has further functional elements, in particular a stowage compartment (18) under the elbow support.

12. A vehicle according to one of the preceding claims **characterised in that** the vehicle (1) is equipped with a lift device, in particular with a front loader (19), wherein the operating device (5) is connected in signal communicating relationship with an actuator (20) of the lift device (19) in such a way that the lift device (19) can be actuated by means of the operating device (5).

13. A vehicle according to one of the preceding claims **characterised in that** the operating device (5) can be brought into signal communicating relationship with a transmission control (21) in such a way that functions of a transmission (22) of the vehicle (1) can be controlled by means of the operating device (5).

14. A vehicle according to one of the preceding claims **characterised in that** the carrier structure (6) and the operating device (5) fixed thereto can be at least region-wise covered by a common casing element (23, 24).

## Revendications

1. Véhicule agricole, en particulier tracteur (1), comprenant un accoudoir (4) qui est disposé sur un siège conducteur (3) du véhicule (1) et auquel est associé au moins un dispositif de commande (5) permettant de commander une fonction du véhicule (1), l'accoudoir (4) présentant une structure de support (6) à laquelle est associé un logement (7) pour la fixation amovible du dispositif de commande (5) sur la structure de support (6), **caractérisé en ce que** le logement (7) est formé par une zone de contact (8) qui est prévue sur la structure de support (6) et qui est réalisée de manière complémentaire à une zone de contact (9) prévue sur le dispositif de commande (5) et à laquelle est associé au moins un moyen de maintien (10) pour maintenir le dispositif de commande (5), une liaison amovible entre les zones de contact (8, 9) pouvant être établie par conjugaison de forces et/ou complémentarité de formes.

2. Véhicule selon la revendication 2, **caractérisé en ce qu'**une zone de contact (8, 9) présente un passage (11) à travers lequel peut être passé une ligne de signaux de commande (12) ou un faisceau de telles lignes de signaux de commande (12) s'étendant entre le dispositif de commande (5) et un raccord se trouvant sur le véhicule (1).

3. Véhicule selon l'une des revendications précédentes, **caractérisé en ce que** le dispositif de commande (5) est une unité constructive qui comprend un dispositif de maintien (13), un levier de commande (14) monté mobile sur celui-ci ainsi qu'un convertisseur (15) qui est adapté pour convertir les mouvements du levier de commande (14) en signaux mécaniques, électriques et/ou hydrauliques.

4. Véhicule selon l'une des revendications précédentes, **caractérisé en ce qu'**un appuie-coude (16) est associé à la structure de support (6) du côté supérieur.

5. Véhicule selon la revendication 4, **caractérisé en ce que**, à l'état fixé sur la structure de support (6), le dispositif de commande (5) est positionné par rapport à l'appuie-coude (16) de sorte qu'un utilisateur du véhicule puisse atteindre le dispositif de commande (5) avec la main lorsque son avant-bras repose sur l'appuie-coude (16).

6. Véhicule selon l'une des revendications précédentes, **caractérisé en ce que** le dispositif de commande (5) peut être fixé sur la structure de support (6) à une extrémité de celle-ci située à l'avant par rapport à une direction longitudinale du véhicule (FR).

7. Véhicule selon l'une des revendications précédentes, **caractérisé en ce que** l'accoudoir (4) est disposé latéralement à côté du siège conducteur (3) par rapport à la direction longitudinale du véhicule (FR).

8. Véhicule selon l'une des revendications précédentes, **caractérisé en ce que** l'accoudoir (4) est monté mobile, en termes de position, par rapport au siège conducteur (3).

9. Véhicule selon l'une des revendications précédentes, **caractérisé en ce que** la structure de support (6) est reliée au siège conducteur (3) au moyen d'un mécanisme à quatre barres (17), en particulier à la façon d'une cinématique à parallélogramme, qui permet un réglage en hauteur de l'accoudoir (4).

10. Véhicule selon la revendication 10, **caractérisé en ce que** la structure de support (6) est montée coulissante longitudinalement par rapport au mécanisme à quatre barres (17) par rapport à la direction longitudinale du véhicule (FR).

11. Véhicule selon l'une des revendications précédentes, **caractérisé en ce que** l'accoudoir (4) comporte d'autres éléments fonctionnels, en particulier un compartiment de rangement (18) situé sous l'appuie-coude.

12. Véhicule selon l'une des revendications précédentes, **caractérisé en ce que** le véhicule (1) est équipé d'un dispositif de levage, en particulier d'un chargeur frontal (19), le dispositif de commande (5) étant en liaison de signalisation avec des actionneurs (20) du dispositif de levage (19) de sorte qu'il soit possible d'actionner le dispositif de levage (19) au moyen du dispositif de commande (5).

13. Véhicule selon l'une des revendications précédentes, **caractérisé en ce que** le dispositif de commande (5) peut être mis en liaison de signalisation avec une commande de boîte de vitesses (21) de sorte qu'il soit possible de commander des fonctions d'une boîte de vitesses (22) du véhicule (1) au moyen du dispositif de commande (5).

14. Véhicule selon l'une des revendications précédentes, **caractérisé en ce que** la structure de support (6) et le dispositif de commande (5) qui y est fixé peuvent être recouverts, au moins dans certaines zones, par un élément de garniture commun (23, 24).
